# EUROPEAN PATENT SPECIFICATION

(11) **EP 2 501 546 B1**
(45) Date of publication and mention of the grant of the patent: **20.04.2016**
(21) Application number: 10779415.8
(22) Date of filing: 11.11.2010
(51) Int. Cl.: B32B 27/30, B32B 27/32, A61J 1/05, A61L 28/00

(54) **RADIO FREQUENCY SEALABLE FILM**
HF-VERSIEGELBARE FOLIE
FILM SCELLABLE PAR RADIOFRÉQUENCES

(30) Priority: 17.11.2009 US 620071
(43) Date of publication of application: 26.09.2012
(73) Proprietor: Cryovac, Inc., Duncan, South Carolina 29334 (US)
(72) Inventor: BEKELE, Solomon, Taylors SC 29687 (US); SPIGAROLI, Romano, I-20025 Legnano (IT)
(74) Representative: Uexküll & Stolberg
(86) International application number: PCT/US2010/056285
(87) International publication number: WO 2011/062828

(56) References cited:
- WO-A1-00/69629
- US-A- 4 600 614
- US-A- 5 895 694
- US-A1- 2004 146 671
- US-B1- 6 558 809

## Description

### FIELD OF THE INVENTION

The present invention relates generally to films for the production of pouches and in particular to radio frequency sealable films that can be used in the production of medical packaging.

### BACKGROUND OF THE INVENTION

Multilayer films having gas and odor barrier properties are well known and widely used in food and medical packaging applications. Generally, it is desirable for such films to have good impact resistance, flexibility, barrier properties, and desirable optical properties.

Where the films are to be used in medical applications, such as ostomy applications, they must also possess a unique combination of odor and moisture barrier properties as well as low noise, softness, heat or radio-frequency sealability, skin compatibility, and comfort. Such films have been provided in the past through the use of multi-ply film laminates where at least one of the plies is oxygen and moisture vapor impermeable.

The primary requirements for materials for the construction of ostomy bags are softness, barrier to odor, light weight and a comfortable feel to the skin. These requirements are usually met in existing laminates by combining a barrier film, which may be a monolayer or multilayer construction, and which is typically in the range of 60 to 100 micrometres thick, with a skin contact substrate material, either non woven or perforated which is secured to the barrier film through a peripheral pouch seal.

In addition to the above mentioned properties, it is also desirable for the film to be RF sealable. This is particularly true in the case of medical packaging, such as in ostomy pouches, where the pouch includes one or more fitments, such as a tube or mounting plate, also commonly called a wafer or baseplate, that provide a means for accessing the interior of the pouch. Fitments provide a means for establishing fluid communication between the interior of the pouch and the outside environment.

Generally, a fitment is attached to the film by welding the fitment directly to an inner surface of the film during the process of making the pouch. The fitments are typically welded through heat sealing, such as impulse sealing, or using radio frequency (RF). In traditional prior art medical pouches, the flexible pouches are made of PVC and the fitment, also of PVC, are sealed to the pouches using RF energy. However, RF energy does not produce the necessary hermetic seal with many of the flexible films which retain their clarity as well as their flexibility and strength, and therefore the use of RF welding has been limited to certain materials. On the other hand, impulse heating sealing has similarly failed to provide the necessary hermetic seals due to limitations of forming the heated wire in the shapes necessary to seal a circular cross section fitment tube to a pair of flat sheets of flexible film. Accordingly, RF sealing has generally been more favorably accepted in the production of pouches for medical applications.

US 2004/0146671 A1 describes flexible monolayer elastomers films for medical uses such as disposable medical devices.

WO 00/69629 A1 describes flexible, halogen-free monolayer and multilayer films comprising a blend of a non-polar olefin polymer and a polar olefin polymer that contains carbon monoxide.

US 5,895,694 A describes chlorine-free multilayer films comprising an ethylenevinyl acetate outer layer for the production of bags and pouches for ostomy use.

Polyethylenes are a type of olefin polymers that have found wide spread use in packaging applications. However, olefins such as polyethylenes, are generally not widely used in RF welding applications, and polyethylene is particularly known in the art to be substantially unsuitable for RF welding unless sensitizers are added to the polymer; this is true regardless of whether it is linear or branched, or of whether it is low, medium, or high density.

Accordingly, there still exists a need for films containing olefinic polymers that can be welded using radio frequency sealing.

### BRIEF SUMMARY OF THE INVENTION

The present invention helps to address the aforementioned needs by providing an RF sealable composition and film in which a layer of the film comprises a blend of an ethylene/alpha-olefin and an ethylene acrylate and/or ethylene vinyl acetate copolymer. The composition and resulting film has a dielectric loss factor of at least 0.02 and is capable of being radio frequency sealed. Films in accordance with the invention provide RF seals having peel strengths on the order of 500 g/in or greater.

In one embodiment, the present invention provides a film having at least one exterior layer that comprises a blend of an ethylene/alpha-olefin copolymer and 20 to 80% by weight of an ethylene acrylate and/or ethylene vinyl acetate copolymer selected from the group consisting of ethylene vinyl acetate (EVA), ethylene butyl acrylate (EBA), ethylene methyl acrylate (EMA), and combinations thereof. By blending an ethylene/alpha olefin with an ethylene acrylate and/or ethylene vinyl acetate copolymer, wherein the amount of the ethylene acrylate and/or ethylene vinyl acetate copolymer is from about 20 to 80 weight percent of the blend, RF sealable films with peel strengths in excess of 500 g/inch can be obtained. The amount of ethylene acrylate and/or ethylene vinyl acetate copolymer in the exterior layer is more typically from about 25 to 70 weight %. In one embodiment, the amount of ethylene acrylate and/or ethylene vinyl acetate copolymer in the exterior layer is at least about 50 weight %.

In a preferred embodiment, the ethylene acrylate and/or ethylene vinyl acetate copolymer comprises ethylene vinyl acetate wherein the vinyl acetate content in the EVA component is from about 12 to 28%, with a content of about 28% being somewhat more preferred. A preferred ethylene/alpha-olefin copolymer for use in the present invention is linear low density polyethylene based on 1-butene.

In one embodiment, a three-layer film is provided comprising a first exterior layer, a second exterior layer, and an interior layer positioned between the first and second exterior layers. The exterior layers each comprise a blend of an ethylene/alpha-olefin copolymer and an ethylene acrylate and/or ethylene vinyl acetate copolymer. The interior layer may comprise a barrier material such as PVDC.

In a further aspect of the present invention, a seven-layer RF sealable film is provided. In this embodiment, the film includes two exterior layers comprising a blend of an ethylene/alpha-olefin copolymer and an ethylene acrylate and/or ethylene vinyl acetate copolymer, a core barrier layer, first and second interior layers disposed between the core and the outer exterior layers. The first and second interiors layers also comprise a blend of an ethylene/alpha-olefin copolymer and an ethylene acrylate and/or ethylene vinyl acetate copolymer. A tie/adhesive layer is disposed between each of the first and second interior layers and the core layer. In one embodiment, the first and second interior layers define bulk layers of the film and generally each have a thickness that is about 20 to 40% of the total thickness of the film. In comparison, the first and second exterior layers have a thickness that typically ranges from about 25 to 75% of the thickness of the first and second interior layers.

The amount of the ethylene acrylate and/or ethylene vinyl acetate copolymer in the exterior layers generally ranges from about 50 to 80 weight percent whereas the content of the ethylene acrylate and/or ethylene vinyl acetate copolymer in the first and second interior layers is typically from about 45 to 60 weight percent.

Films in accordance with the present invention provide good RF sealability and are particularly useful in medical pouch applications, such as ostomy bags and the like.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a schematic cross-section of a three-layer film in accordance with the present invention; and
FIG. 2 is a schematic cross-section of a five-layer film in accordance with the present invention; and
FIG. 3 is a schematic cross-section of a seven-layer film in accordance with the present invention.

### DETAILED DESCRIPTION OF THE INVENTION

The present invention now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

Embodiments of the invention are directed to a composition and films that are radio frequency (RF) sealable. In particular, the invention provides a film having an exterior layer that can be sealed to itself or another film using RF energy to heat and weld the surface of exterior layer. Films in accordance with the present invention can be used to form a variety of packaging structures including pouches, bags, satchels and the like. In one embodiment, the present invention is directed to pouches for medical applications, including the packaging of medical solutions, containment of human drainage, such as ostomy, colostomy, urostomy pouches, and the like.

As discussed previously, the present invention provides a multilayer film having a first exterior layer comprising a blend of an ethylene/alpha-olefin copolymer and an ethylene acrylate and/or ethylene vinyl acetate copolymer, a second exterior that may be the same or different from the first exterior layer, and at least one inner layer disposed between the exterior layers. The film has a dielectric loss factor of at least 0.02 and is capable of being radio frequency sealed. Unless stated to the contrary, the dielectric loss factor was determined in accordance with ASTM D 150. Films in accordance with the invention provide RF seals having peel strengths on the order of 500 g/in or greater as measure in accordance with ASTM F 88. In some embodiments, the peel strength of the RF seals are greater than 1000 g/in., and in particular, greater than about 2,000 g/in.

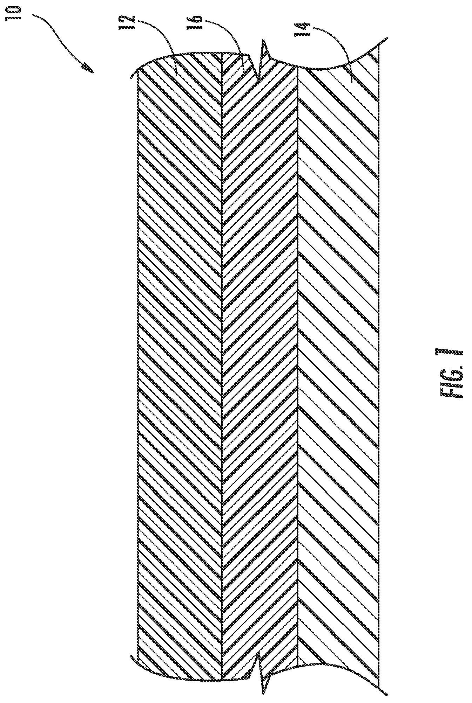

Referring now to FIG. 1, a three-layer film in accordance with the present invention is illustrated and broadly designated by reference number 10. Three-layer film **10** includes a first exterior layer **12,** a second exterior layer **14,** and an interior layer **16** positioned between exterior layers **12** and **16.** It should be noted, however, that additional layers, e.g., adhesive layers or additional function layers, such as barrier layers, may be included in film **10** as desired.

When the multilayer film of the present invention is used to form a pouch, such as an I.V. bag, ostomy pouch, or air-bladder portion of a compression device, the first exterior layer preferably forms the outer surface of the pouch (i.e., the surface which is exposed to the environment) while the second exterior layer forms the inner surface of the pouch (i.e., the surface which is in contact with the inside of the pouch and, therefore, with the product, drainage, or air which is enclosed within the pouch). In this fashion, the first exterior layer provides the pouch with abuse-resistance, and gloss, as well as a high degree of flexibility and strength as noted above. The second exterior layer serves as a sealant layer. In this role, peripheral portions of the second exterior layer are joined, e.g., by radio frequency (RF) sealing, to form an enclosure.

In one embodiment, at least one exterior layers **12, 14** of the film comprises a blend of an ethylene/alpha-olefin copolymer and an ethylene acrylate and/or ethylene vinyl acetate copolymer. In an exemplary embodiment described below, the first and second exterior layers **12, 14** of the film both comprise a blend an ethylene/alpha-olefin copolymer and an ethylene acrylate and/or ethylene vinyl acetate copolymer. The film includes a layer comprising a blend of an ethylene/alpha-olefin copolymer and an ethylene acrylate and/or ethylene vinyl acetate copolymer selected from the group consisting of ethylene vinyl acetate (EVA), ethylene butyl acrylate (EBA), and ethylene methyl acrylate (EMA), and combinations thereof. The inventors of the present invention have discovered that by blending an ethylene/alpha olefin copolymer with an ethylene acrylate and/or ethylene vinyl acetate copolymer, wherein the amount of the ethylene acrylate and/or ethylene vinyl acetate copolymer is from about 20 to 80 weight percent of the blend, RF sealable films with peel strengths in excess of 500 g/inch can be obtained. The amount of ethylene acrylate and/or ethylene vinyl acetate copolymer in the exterior layer is typically from about 50 to 70 weight %, based on the total weight of the film, and more typically at least about 50 weight %.

In a preferred embodiment, the ethylene acrylate and/or ethylene vinyl acetate copolymer comprises ethylene vinyl acetate. The term "EVA" or "ethylene vinyl acetate copolymer" refers generally to a copolymer formed with ethylene and vinyl acetate monomers in which the ethylene derived units in the copolymer are present in major amounts, preferably from about 60 to 98% by weight, and the vinyl acetate-derived units in the copolymer are present in minor amounts, preferably from about 2 to 40 percent by weight of the total. In this embodiment, the EVA may have a high vinyl acetate content, for example, from about 12 to 28%, with a content of about 28% being somewhat more preferred.

Generally, the peel strength of the RF seal increases as the amount the vinyl acetate (VA), butyl acrylate (BA), or methyl acrylate (MA) content in the ethylene acrylate and/or ethylene vinyl acetate copolymer increases. For example, a blend of an ethylene/alpha-olefin copolymer and an ethylene vinyl acetate copolymer wherein the vinyl acetate content in the ethylene vinyl acetate copolymer is about 28 weight % will produce a RF seal having a greater peel strength than a similar blend in which the vinyl acetate content is about 12 weight %. Accordingly, at lower levels of the VA, BA or MA in the ethylene acrylate and/or ethylene vinyl acetate copolymer, it may be desirable to include a higher content of the ethylene acrylate and/or ethylene vinyl acetate copolymer in the overall blend.

In addition, ethylene acrylate and/or ethylene vinyl acetate copolymers comprising BA and MA generally provide stronger RF seals than ethylene acrylate and/or ethylene vinyl acetate copolymers comprising VA. As such, the amount of EBA or EMA in the blend desirable for making an RF sealable film is generally less than the amount need for blends comprising EVA. For example, if the ethylene/alpha olefin-ethylene acrylate and/or ethylene vinyl acetate copolymer blend comprises EVA, the amount of EVA in the blend is typically from about 45 to 80 weight percent, with about 45 to 60 weight percent of EVA being somewhat more typical. On the other hand, if the ethylene acrylate copolymer is EBA, the amount of the EBA in the blend is typically at least about 20 weight percent and more typically at least about 35 weight percent. In embodiments comprising EMA, the amount of EMA in the blend is typically at least about 25 to 70 weight percent, with an amount of 40 weight percent being somewhat more preferred.

A wide variety of ethylene/alpha-olefin (EAO) copolymers may be used in the practice of the present invention. The term "ethylene/alpha-olefin copolymer" generally designates copolymers of ethylene with one or more comonomers selected from C₃ to C₂₀ alpha-olefins, such as 1-butene, 1-pentene, 1-hexene, 1-octene, methyl pentene and the like, in which the polymer molecules comprise long chains with relatively few side chain branches. These polymers are obtained by low pressure polymerization processes and the side branching which is present will be short compared to non-linear polyethylenes (e.g., LDPE, a polyethylene homopolymer). The polyethylene polymers may be either heterogeneous or homogeneous.

Heterogeneous ethylene/alpha-olefin copolymers are ethylene/alpha-olefin copolymerization reaction products of relatively wide variation in molecular weight and composition distribution, and which are prepared using conventional Ziegler-Natta or other heterogeneous catalysts. Examples of heterogeneous ethylene/alpha-olefins include linear low density polyethylene (LLDPE), linear medium density polyethylene (LMDPE), very low density polyethylene (VLDPE), and ultra-low density polyethylene (ULDPE). LLDPE is generally understood to include that group of heterogeneous ethylene/alpha-olefin copolymers which fall into the density range of about 0.915 to about 0.94 g/cc. Sometimes linear polyethylene in the density range from about 0.926 to about 0.94 is referred to as LMDPE. Lower density heterogeneous ethylene/alpha-olefin copolymers are VLDPE (typically used to refer to the ethylene/butene copolymers available from Union Carbide with a density ranging from about 0.88 to about 0.91 g/cc) and ULDPE (typically used to refer to the ethylene/octene copolymers supplied by Dow). EAOs are copolymers of ethylene and one or more alpha-olefins, the copolymer having ethylene as the majority mole-percentage content. In some embodiments, the comonomer includes one or more C₃-C₂₀ alpha-olefins, such as one or more C₄-C₁₂ alpha-olefins, or one or more C₄-C₈ alpha-olefins. Particularly useful alpha-olefins include 1-butene, 1-hexene, 1-octene, and mixtures thereof.

Useful EAOs include those having a density of less than about any of the following: 0.925, 0.922, 0.92, 0.917, 0.915, 0.912, 0.91, 0.907, 0.905, 0.903, 0.9, and 0.86 grams/cubic centimeter. Unless otherwise indicated, all densities herein are measured according to ASTM D1505.

As is known in the art, heterogeneous polymers have a relatively wide variation in molecular weight and composition distribution. Heterogeneous polymers may be prepared with, for example, conventional Ziegler Natta catalysts.

On the other hand, homogeneous polymers are typically prepared using metallocene or other single site-type catalysts. Such single-site catalysts typically have only one type of catalytic site, which is believed to be the basis for the homogeneity of the polymers resulting from the polymerization. Homogeneous polymers are structurally different from heterogeneous polymers in that homogeneous polymers exhibit a relatively even sequencing of comonomers within a chain, a mirroring of sequence distribution in all chains, and a similarity of length of all chains. As a result, homogeneous polymers have relatively narrow molecular weight and composition distributions. Examples of homogeneous polymers include the metallocene-catalyzed linear homogeneous ethylene/alpha-olefin copolymer resins available from the Exxon Chemical Company (Baytown, TX) under the EXACT trademark, linear homogeneous ethylene/alpha-olefin copolymer resins available from the Mitsui Petrochemical Corporation under the TAFMER trademark, and long-chain branched, metallocene-catalyzed homogeneous ethylene/alpha-olefin copolymer resins available from the Dow Chemical Company under the AFFINITY trademark.

More particularly, homogeneous ethylene/alpha-olefin copolymers may be characterized by one or more properties known to those of skill in the art, such as molecular weight distribution (M_{w}/Mₙ), composition distribution breadth index (CDBI), narrow melting point range, and single melt point behavior. The molecular weight distribution (M_{w}/Mₙ), also known as "polydispersity," may be determined by gel permeation chromatography. Homogeneous ethylene/alpha-olefin copolymers which can be used in the present invention generally have an M_{w}/Mₙ of less than 2.7; such as from about 1.9 to 2.5; or from about 1.9 to 2.3 (in contrast heterogeneous ethylene/alpha-olefin copolymers generally have a M_{w}/Mₙ of at least 3). The composition distribution breadth index (CDBI) of such homogeneous ethylene/alpha-olefin copolymers will generally be greater than about 70 percent. The CDBI is defined as the weight percent of the copolymer molecules having a comonomer content within 50 percent (i.e., plus or minus 50%) of the median total molar comonomer content. The CDBI of linear ethylene homopolymer is defined to be 100%. The Composition Distribution Breadth Index (CDBI) is determined via the technique of Temperature Rising Elution Fractionation (TREF). CDBI determination may be used to distinguish homogeneous copolymers (i.e., narrow composition distribution as assessed by CDBI values generally above 70%) from VLDPEs available commercially which generally have a broad composition distribution as assessed by CDBI values generally less than 55%. TREF data and calculations therefrom for determination of CDBI of a copolymer may be calculated from data obtained from techniques known in the art, such as, for example, temperature rising elution fractionation as described, for example, in Wild et. al., J. Poly. Sci. Poly. Phys. Ed., Vol. 20, p.441 (1982). In some embodiments, homogeneous ethylene/alpha-olefin copolymers have a CDBI greater than about 70%, i.e., a CDBI of from about 70% to 99%. In general, homogeneous ethylene/alpha-olefin copolymers useful in the present invention also exhibit a relatively narrow melting point range, in comparison with "heterogeneous copolymers", i.e., polymers having a CDBI of less than 55%. In some embodiments, the homogeneous ethylene/alpha-olefin copolymers exhibit an essentially singular melting point characteristic, with a peak melting point (Tₘ), as determined by Differential Scanning Calorimetry (DSC), of from about 60° C to 105° C. In one embodiment, the homogeneous copolymer has a DSC peak Tₘ of from about 80° C. to 100° C. As used herein, the phrase "essentially single melting point" means that at least about 80%, by weight, of the material corresponds to a single Tₘ peak at a temperature within the range of from about 60° C to 105° C, and essentially no substantial fraction of the material has a peak melting point in excess of about 115° C, as determined by DSC analysis. DSC measurements are made on a Perkin Elmer SYSTEM 7™ Thermal Analysis System. Melting information reported are second melting data, i.e., the sample is heated at a programmed rate of 10° C/min. to a temperature below its critical range. The sample is then reheated (2nd melting) at a programmed rate of 10° C/min.

A homogeneous ethylene/alpha-olefin copolymer can, in general, be prepared by the copolymerization of ethylene and any one or more alpha-olefin. For example, the alpha-olefin is a C₃-C₂₀ alpha-monoolefin, such as a C₄-C₁₂ or a C₄-C₈ alpha-monoolefin. For example, the alpha-olefin comprises at least one member selected from the group consisting of butene-1, hexene-1, and octene-1, i.e., 1-butene, 1-hexene, and 1-octene, respectively, or a blend of hexene-1 and butene-1.

Processes for preparing and using homogeneous polymers are disclosed in U.S. Pat. No. 5,206,075, to HODGSON, Jr., U.S. Pat. No. 5,241,031, to MEHTA, and PCT International Application WO 93/03093, each of which is hereby incorporated herein by reference thereto, in its entirety. Further details regarding the production and use of homogeneous ethylene/alpha-olefin copolymers are disclosed in PCT International Publication Number WO 90/03414, and PCT International Publication Number WO 93/03093, both of which designate Exxon Chemical Patents, Inc. as the Applicant, and both of which are hereby incorporated herein by reference thereto, in their respective entireties.

Still another species of homogeneous ethylene/alpha-olefin copolymers is disclosed in U.S. Pat. No. 5,272,236, to LAI, et al., and U.S. Pat. No. 5,278,272, to LAI, et al., both of which are hereby incorporated herein by reference thereto, in their respective entireties.

In one particular embodiment, the ethylene/alpha-olefin copolymer comprises a linear low density polyethylene (LLDPE) composed of copolymers of ethylene and comonomers of 1-butene. Desirably, the content of butene is from about 8 to 16 weight %. An exemplary commercially available LLDPE that can be used in accordance with the present invention is Sabic^{®} 518N or Sabic 118N available from Saudi Basic Industries Corporation.

Interior layer 16 is typically serves as a functional or core layer of the film. In one embodiment, interior layer **16** is comprised of a material having barrier properties so that the film is substantially impervious to vapor and liquids. As noted above, embodiments of the multilayer film of the present invention include an interior layer positioned between the first and second exterior layers. Depending upon the particular application for which the multilayer film is to be used, the interior layer may provide additional desired properties, e.g., oxygen-barrier functionality, strength, RF sealability, or melt strength. In addition, the interior layer can serve to reduce the cost of the film by allowing less material to be used in the other layers of the film structure.

Suitable materials from which the interior layer may be selected include poly(ethylene/vinyl alcohol)(EVOH), poly(vinyl alcohol) (PVOH), polyacrylonitrile (PAN), polyesters such as polyethylene terephthalate (PET), and polyethylene naphthalate (PEN), and their copolyesters, polyvinyl chloride (PVC and its copolymers), polyvinylidene chloride (PVDC and its copolymers), and polyamides such as polycaprolactam (nylon 6), metaxylylene adipamide (MXD6), MXD6/MXDI and copolyamides based on m-xylylenediamine, hexamethylene adipamide (nylon 66), amorphous polyamides such as nylon 6I,6T, as well as various amide copolymers and various blends of the above. Additional oxygen barriers include metal foil layers, metal coatings, depositions of metal, metal oxides such as silica (SiOₓ), alumina, nano clays and vermiculite can also provide oxygen barrier properties.

Although ethylene/vinyl alcohol copolymer is not as flexible as the other listed materials, it may nevertheless be useful in certain applications. Polyvinylidene chloride (PVDC) homopolymers and, more preferably, copolymers, are preferred for use in the interior layer when gas-barrier functionality is desired in the multilayer film of the present invention. This would be the case when the film is formed into, e.g., an ostomy-type drainage pouch to prevent odors from escaping the pouch. One suitable polymer that may be used in accordance with the present invention comprises PVDC and methyl acrylate copolymer available from Solvin under the tradename Ixan PV910. Other suitable PVDC polymers that may be used in accordance with the present invention are available from Dow Chemical under the tradename SARAN.

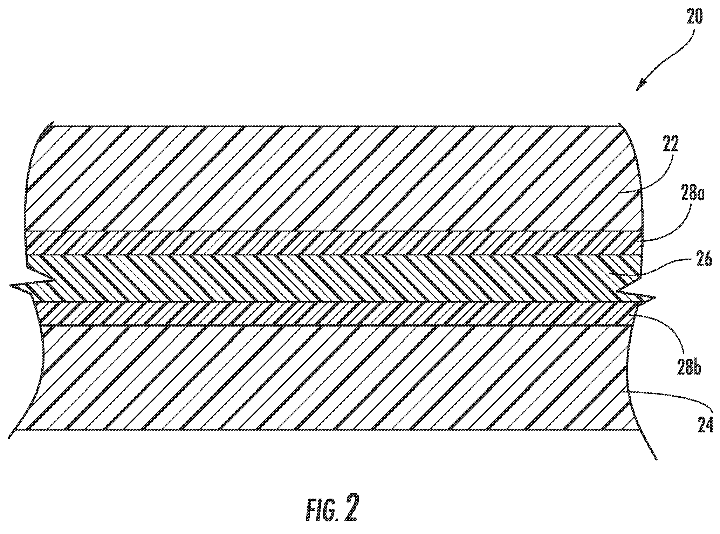

Referring now to FIG. 2, a five-layer film that is in accordance with an embodiment of the invention is illustrated and broadly designated by reference number **20.** Five-layer film **20** includes a first exterior layer **22,** a second exterior layer **24,** an interior layer **26,** adhesive layers **28a, 28b** positioned between first exterior layer **22** and interior layer **26,** and between second exterior layer **24** and interior layer **26,** respectively. First exterior layer **22** corresponds generally with layer **12** as described above, second exterior layer **24** corresponds with layer **14** as described above, and interior layer **26** corresponds generally with layer **16** as described above. As with three-layer film **10,** additional layers may be added to film **20** as desired. Layers **28a, 28b** are provided as needed to tie interior layer **26** to exterior layers **22, 24.** As such, layers **28a, 28b** function as an adhesive layer.

In one embodiment, the present invention provides a five-layer film as described above in which the exterior layers comprise a blend of an ethylene/alpha-olefin copolymer and an ethylene acrylate and/or ethylene vinyl acetate copolymer in which amount of ethylene acrylate and/or ethylene vinyl acetate copolymer is from about 40 to 80 weight percent, with an amount of about 50 to 70 weight percent being typical.

The total thickness of film **20** may range from about 25 to about 150 microns, with a range from about 50 to 125 microns being preferred. Exterior layers **22, 24** preferably provide from about 50 to about 90 percent, and more preferably about 60 to 80 percent, of the total thickness of film **20.** The interior layer **26** generally has a thickness that is from about 3 to 15 microns, with a thickness of about 5 to 10 being preferred. The adhesive layers generally range from about 3 to 10 microns, and in particular from about 3 to 5 microns in thickness.

Adhesive layers **28a, 28b** may include any suitable adhesive material, such as, e.g., anhydride-modified EVA copolymer, anhydride-modified EMA copolymer, and anhydride-modified EBA copolymer, unmodified EVA, unmodified EMA and unmodified EnBA with comonomer content of about 6 to 30 weight %.

Of the foregoing materials, anhydride-modified EVA copolymer is preferred, particularly those in which the vinyl acetate content thereof is 25 weight percent or more. A preferred such material is "BYNEL CXA E-361" from DuPont.

Adhesive layers **28a, 28b** may comprise a material selected from the group consisting of anhydride-modified EVA copolymer; anhydride-modified ethylene/acrylate copolymer (e.g., anhydride-modified EMA copolymer, anhydride-modified ethylene/ethyl acrylate copolymer, and anhydride-modified EBA copolymer); anhydride-modified ethylene/alpha-olefin (EAO) copolymer (e.g., anhydride-modified linear low density polyethylene and anhydride-modified very low density polyethylene); homogeneous ethylene/alpha-olefin copolymer, particularly those having a density of less than about 0.89 g/cc (e.g., ethylene/octene copolymer); anhydride-modified high density polyethylene; and mixtures of the foregoing materials.

Suitable anhydride-modified EMA copolymers are commercially available from DuPont under the tradename BYNEL™, and from Quantum Chemicals under the tradename PLEXAR™. Anhydride-modified linear low density polyethylene is commercially available from Mitsui under the tradename ADMER™, and from DuPont under the tradename BYNEL™. Each of the other materials which can be used for adhesive layers **28a** and **28b** are also commercially available.

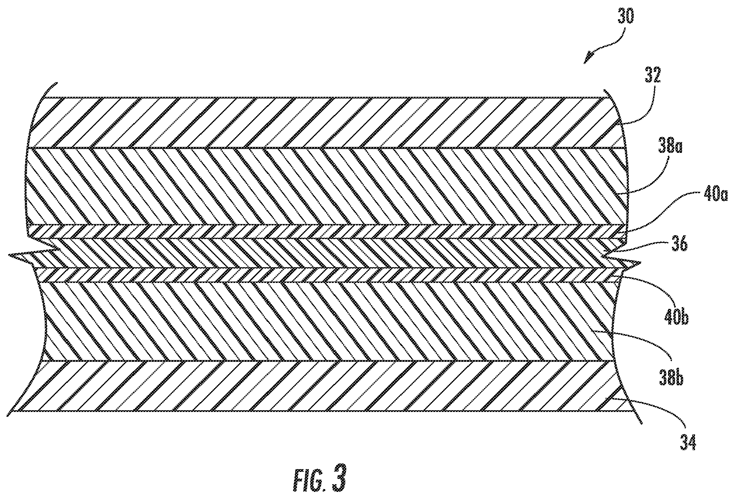

With reference to FIG. 3, a seven-layer film that is in accordance with an embodiment of the invention is illustrated and broadly designated by reference number **30.** In this embodiment, exterior layers **32, 34,** comprise a blend of an ethylene/alpha-olefin copolymer and an ethylene acrylate and/or ethylene vinyl acetate copolymer as discussed above. Interior layer **36** may be a functional or core layer as discussed above. Interior layers **38a** and **38b** are disposed between the outer exterior layers **32, 34** and interior layer **36.** Adhesive or tie layers **40a, 40b** are each disposed between interior layers **38a, 38b** and interior layer **36.** In a preferred embodiment, the corresponding layers disposed on opposite sides of interior layer **36** are the same or similar to each other. For example, layers **32** and **34** are preferably the same or of a similar composition as are each other as are layers **38a** and **38b.** Interior layer **36** may comprise a barrier material such as PVDC. Suitable materials for the adhesive/tie layer **40a, 40b** are discussed above.

In the illustrated embodiment, the interior layers **38a** and **38b** are the bulk layers of the film and help to provide strength and integrity to the film. In one embodiment, interior layers **38a** and **38b** also contribute to the RF sealability of the film. In one such embodiment, interior layers **38a** and **38b** and each exterior layer comprise a blend of an ethylene/alpha-olefin copolymer and an ethylene acrylate and/or ethylene vinyl acetate copolymer. In particular, the blend may comprise a LLDPE and EVA in which the EVA is present in an amount from about 60 to 80 weight percent and the LLDPE is present in an amount from about 15 to 40 weight percent. In this embodiment, interior layers **38a** and **38b** may also each comprise a blend LLDPE and EVA in which the EVA is present in an amount of at least 50 weight percent and the LLDPE is present in an amount from about 35 to 50 weight percent.

The total thickness of film **30** may range from about 25 to about 150 microns, with a range from about 50 to 100 microns being preferred. When present, interior layers **38a** and **38b** typically each comprise from about 20 to 40% of the thickness of the film, and in particular, from about 25 to 35% of the film's thickness, with about 30% of the film's thickness being somewhat more typical. Interior layers **38a, 38b** of the film generally have a thickness from about 15 to 45 microns, and in particular, from about 30 to 30 microns. Exterior layers **32, 34** are typically of a thinner gauge than bulk interior layers **38a, 38b.** For instance, exterior layers **32, 34** may each be about 25 to 75% of the thickness of interior layers **38a, 38b.** In one embodiment, the exterior layers **32, 34** of the film may be from about 5 to 20 microns, with a thickness of 5 to 10 being preferred.

The interior layer **36** generally has a thickness that is from about 3 to 15 microns, with a thickness of about 5 to 10 being preferred. The adhesive layers **40a, 40b** generally range from about 3 to 10 microns, and in particular from about 3 to 5 microns in thickness. It should be recognized that the overall thickness of the film and the thickness of individual layers is not limited to any specific range provided the desired properties and processability of the film is maintained.

As can be appreciated by those having ordinary skill in this art, the multilayer films of the present invention are not limited to the three or seven-layer structures described above. Films having fewer or greater numbers of layers, e.g., two, four, six, eight, nine, or more layers, are included within the scope of the present invention. For example, additional high density polyethylene layer(s) may be included in the film in order to increase the moisture barrier capabilities of the film if such an increase is desired. Additional oxygen barrier layer(s) may also be included if desired.

Various additives may used in any or all of the layers of the multilayer films of the present invention. Such additives include, without limitation, antiblocking agents, antioxidants, processing aids such as calcium stearate, pigments, antistatic agents, etc. Where the multilayer film is to be used to for making medical solution pouches, the amount of additive included in the film is preferably kept to a minimum in order to minimize the likelihood that such additives will be extracted into the medical solution.

The multilayer films of the present invention can be formed by cast coextrusion as a tubular film. Containers for medical applications or other end uses can be made directly from the coextruded, tubular film, or alternatively from rollstock material obtained from the tube after it has been slit and ply-separated. A hot blown process can also be used to make the film. Other processes, such as extrusion coating, conventional lamination, slot die extrusion, etc., can also be used to make the multilayer film of the present invention, although these alternative processes can be more difficult or less efficient than the above methods. In addition to RF sealability, embodiments of the invention can also be heat sealed, such as with impulse heat sealing.

The multilayer films of the present invention have been described in connection with medical applications. However, it is to be understood that other applications for the films are also possible, and that this disclosure should not be construed as being limited only to medical pouches or devices.

The invention may be further understood by reference to the following examples, which are provided for the purpose of representation, and are not to be construed as limiting the scope of the invention.

### EXAMPLES

The films produced in Examples were hot blown.. The materials used in the films are identified below. All percentages are weight percents unless indicated otherwise. All physical property and compositional values are approximate unless indicated otherwise.
"EVA-1": Elvax 3165: 18.0 weight % vinyl acetate copolymer available from Dupont.
"EVA-2": Evatane 28-03: 28.0 weight % vinyl acetate copolymer available from Arkema.
"EVA-3": Escorene FL00328: 27.0 weight % vinyl acetate copolymer available from ExxonMobil.
"EVA-4": Escorene FL00206: 6.5 weight % vinyl acetate copolymer available from ExxonMobil.
"EVA-5": Escorene FL00112: 12.0 weight % vinyl acetate copolymer available from ExxonMobil.
"PVDC": Ixan PV910; polyvinylidene chloride/methyl acrylate (8.5 weight % methyl acrylate) available from Solvin.
"LLDPE-1": Sabic 518N; linear low density polyethylene (1-butene based) available from Sabic.
"EMA": Lotryl 24MA05, ethylene methyl acrylate copolymer with 24 wt. % methyl acrylate available from Arkema Inc.
"EBA": Lotryl 30BA02, ethylene butyl acrylate copolymer with 30 wt. % butyl acrylate available from Arkema Inc.
"AB": Antiblock and wax.

### Control

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 95.0% EVA-1, 5% AB | 16.75 | 16.75 |
| Layer 2 | First Interior/Bulk Layer: | 95.0% EVA-1, 5% AB | 16.75 | 16.75 |
| Layer 3 | Adhesive/Tie Layer: | EVA-2 | 11.5 | 11.5 |
| Layer 4 | Barrier (Core) Layer: | PVDC | 10 | 10 |
| Layer 5 | Adhesive/Tie Layer: | EVA-2 | 11.5 | 11.5 |
| Layer 6 | Second Interior/Bulk Layer: | 95.0% EVA-1, 5% AB | 16.75 | 16.75 |
| Layer 7 | Second Exterior Layer: | 95.0% EVA-1, 5% AB | 16.75 | 16.75 |

### Example 1

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 60.0% EVA-1, 36% LLDPE-1, 4% AB | 10 | 10 |
| Layer 2 | First Interior/Bulk Layer: | 60.0% EVA-1, 36% LLDPE-1, 4% AB | 30 | 30 |
| Layer 3 | Adhesive/Tie Layer: | EVA-2 | 5 | 5 |
| Layer 4 | Barrier (Core) Layer: | PVDC | 10 | 10 |
| Layer 5 | Adhesive/Tie Layer: | EVA-2 | 5 | 5 |
| Layer 6 | Second Interior/Bulk Layer: | 60.0% EVA-1, 36% LLDPE-1, 4% AB | 30 | 30 |
| Layer 7 | Second Exterior Layer: | 60.0% EVA-1, 36% LLDPE-1, 4% AB | 10 | 10 |

### Example 2

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 60.0% EVA-1, 36% LLDPE-1, 4% AB | 10 | 10 |
| Layer 2 | First Interior/Bulk Layer: | 60.0% EVA-1, 36% LLDPE-1, 4% AB | 30 | 30 |
| Layer 3 | Adhesive/Tie Layer: | EVA-1 | 5 | 5 |
| Layer 4 | Barrier (Core) Layer: | PVDC | 10 | 10 |
| Layer 5 | Adhesive/Tie Layer: | EVA-1 | 5 | 5 |
| Layer 6 | Second Interior/Bulk Layer: | 60.0% EVA-1, 36% LLDPE-1, 4% AB | 30 | 30 |
| Layer 7 | Second Exterior Layer: | 60.0% EVA-1, 36% LLDPE-1, 4% AB | 10 | 10 |

### Example 3

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 50.0% EVA-1, 46% LLDPE-1, 4% AB | 10 | 10 |
| Layer 2 | First Interior/Bulk Layer: | 50.0% EVA-1, 46% LLDPE-1, 4% AB | 30 | 30 |
| Layer 3 | Adhesive/Tie Layer: | EVA-1 | 5 | 5 |
| Layer 4 | Barrier (Core) Layer: | PVDC | 10 | 10 |
| Layer 5 | Adhesive/Tie Layer: | EVA-1 | 5 | 5 |
| Layer 6 | Second Interior/Bulk Layer: | 50.0% EVA-1, 46% LLDPE-1, 4% AB | 30 | 30 |
| Layer 7 | Second Exterior Layer: | 50.0% EVA-1, 46% LLDPE-1, 4% AB | 10 | 10 |

### Example 4

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 70.0% EVA-1, 26% LLDPE-1, 4% AB | 10 | 10 |
| Layer 2 | First Interior/Bulk Layer: | 50.0% EVA-1, 46% LLDPE-1, 4% AB | 30 | 30 |
| Layer 3 | Adhesive/Tie Layer: | EVA-1 | 5 | 5 |
| Layer 4 | Barrier (Core) Layer: | PVDC | 10 | 10 |
| Layer 5 | Adhesive/Tie Layer: | EVA-1 | 5 | 5 |
| Layer 6 | Second Interior/Bulk Layer: | 50.0% EVA-1, 46% LLDPE-1, 4% AB | 30 | 30 |
| Layer 7 | Second Exterior Layer: | 70.0% EVA-1, 26% LLDPE-1, 4% AB | 10 | 10 |

### Example 5

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 70.0% EVA-1, 26% LLDPE-1, 4% AB | 10 | 10 |
| Layer 2 | First Interior/Bulk Layer: | 40.0% EMA, 56% LLDPE-1, 4% AB | 30 | 30 |
| Layer 3 | Adhesive/Tie Layer: | EVA-1 | 5 | 5 |
| Layer 4 | Barrier (Core) Layer: | PVDC | 10 | 10 |
| Layer 5 | Adhesive/Tie Layer: | EVA-1 | 5 | 5 |
| Layer 6 | Second Interior/Bulk Second Interior/Bulk Layer: | 40.0% EMA, 56% LLDPE-1, 4% AB | 30 | 30 |
| Layer 7 | Second Exterior Layer: | 70.0% EVA-1, 26% LLDPE-1, 4% AB | 10 | 10 |

### Example 6

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 70.0% EVA-1, 25% LLDPE-1, 5% AB | 7.0 | 10 |
| Layer 2 | First Interior/Bulk Layer: | 55.0% EVA-1, 45% LLDPE-1, | 21.5 | 30.7 |
| Layer 3 | Adhesive/Tie Layer: | EVA-1 | 4.0 | 5.7 |
| Layer 4 | Barrier (Core) Layer: | PVDC | 5.0 | 7.1 |
| Layer 5 | Adhesive/Tie Layer: | EVA-1 | 4.0 | 5.7 |
| Layer 6 | Second Interior/Bulk Layer: | 55.0% EVA-1, 45% LLDPE-1, | 21.5 | 30.7 |
| Layer 7 | Second Exterior Layer: | 70.0% EVA-1, 25% LLDPE-1, 5% AB | 7.0 | 10 |

### Example 7

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 70.0% EVA-1, 25% LLDPE-1, 5% AB | 5.0 | 10.0 |
| Layer 2 | First Interior/Bulk Layer: | 55.0% EVA-1, 45% LLDPE-1, | 14.5 | 29.0 |
| Layer 3 | Adhesive/Tie Layer: | EVA-1 | 3.0 | 6.0 |
| Layer 4 | Barrier (Core) Layer: | PVDC | 5.0 | 10.0 |
| Layer 5 | Adhesive/Tie Layer: | EVA-1 | 3.0 | 6.0 |
| Layer 6 | Second Interior/Bulk Layer: | 55.0% EVA-1, 45% LLDPE-1, | 14.5 | 29.0 |
| Layer 7 | Second Exterior Layer: | 70.0% EVA-1, 25% LLDPE-1, 5% AB | 5.0 | 10 |

### Example 8

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 60.0% EVA-1, 36% LLDPE-1, 4% AB | 10 | 10 |
| Layer 2 | First Interior/Bulk Layer: | 60.0% EVA-1, 36% LLDPE-1, 4% AB | 30 | 30 |
| Layer 3 | Adhesive/Tie Layer: | EVA-1 | 5 | 5 |
| Layer 4 | Barrier (Core) Layer: | PVDC | 10 | 10 |
| Layer 5 | Adhesive/Tie Layer: | EVA-1 | 5 | 5 |
| Layer 6 | Second Interior/Bulk Layer: | 60.0% EVA-1, 36% LLDPE-1, 4% AB | 30 | 30 |
| Layer 7 | Second Exterior Layer: | 60.0% EVA-1, 36% LLDPE-1, 4% AB | 10 | 10 |

### Example 9

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 40.0% EBA, 56% LLDPE-1, 4% AB | 10 | 10 |
| Layer 2 | First Interior/Bulk Layer: | 40.0% EBA, 56% LLDPE-1, 4% AB | 30 | 30 |
| Layer 3 | Adhesive/Tie Layer: | EVA-1 | 5 | 5 |
| Layer 4 | Barrier (Core) Layer: | PVDC | 10 | 10 |
| Layer 5 | Adhesive/Tie Layer: | EVA-1 | 5 | 5 |
| Layer 6 | Second Interior/Bulk Layer: | 40.0% EBA, 56% LLDPE-1, 4% AB | 30 | 30 |
| Layer 7 | Second Exterior Layer: | 40.0% EBA, 56% LLDPE-1, 4% AB | 10 | 10 |

### Example 10

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 40.0% EBA, 50% LLDPE-1, 10% AB | 10 | 10 |
| Layer 2 | First Interior/Bulk Layer: | 40.0% EBA, 50% LLDPE-1, 10% AB | 30 | 30 |
| Layer 3 | Adhesive/Tie Layer: | EVA-1 | 5 | 5 |
| Layer 4 | Barrier (Core) Layer: | PVDC | 10 | 10 |
| Layer 5 | Adhesive/Tie Layer: | EVA-1 | 5 | 5 |
| Layer 6 | Second Interior/Bulk Layer: | 40.0% EBA, 50% LLDPE-1, 10% AB | 30 | 30 |
| Layer 7 | Second Exterior Layer: | 40.0% EBA, 50% LLDPE-1, 10% AB | 10 | 10 |

### Example 11

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 40.0% EMA, 50% LLDPE-1, 10% AB | 10 | 10 |
| Layer 2 | First Interior/Bulk Layer: | 40.0% EMA, 50% LLDPE-1, 10% AB | 30 | 30 |
| Layer 3 | Adhesive/Tie Layer: | EVA-1 | 5 | 5 |
| Layer 4 | Barrier (Core) Layer: | PVDC | 10 | 10 |
| Layer 5 | Adhesive/Tie Layer: | EVA-1 | 5 | 5 |
| Layer 6 | Second Interior/Bulk Layer: | 40.0% EMA, 50% LLDPE-1, 10% AB | 30 | 30 |
| Layer 7 | Second Exterior Layer: | 40.0% EMA, 50% LLDPE-1, 10% AB | 10 | 10 |

### Example 12

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 20.0% EVA-1, 75% LLDPE-1, 5% AB | 10 | 10 |
| Layer 2 | First Interior/Bulk Layer: | 20.0% EVA-1, 80% LLDPE-1 | 30 | 30 |
| Layer 3 | Adhesive/Tie Layer: | EVA-2 | 5 | 5 |
| Layer 4 | Barrier (Core) Layer: | PVDC | 10 | 10 |
| Layer 5 | Adhesive/Tie Layer: | EVA-2 | 5 | 5 |
| Layer 6 | Second Interior/Bulk Layer: | 20.0% EVA-1, 80% LLDPE-1 | 30 | 30 |
| Layer 7 | Second Exterior Layer: | 20.0% EVA-1, 75% LLDPE-1, 5% AB | 10 | 10 |

### Example 13

A multilayer film in accordance with the present invention had the following 7-layer structure, with each layer being listed in the same order in which it appeared in the film:

| Layer No. | Function/Position | Layer Composition | Thickness (microns) | Vol. (%) |
|---|---|---|---|---|
| Layer 1 | First Exterior layer: | 40.0% EVA-1, 55% LLDPE-1, 5% AB | 10 | 10 |
| Layer 2 | First Interior/Bulk Layer: | 40.0% EVA-1, 60% LLDPE-1 | 30 | 30 |
| Layer 3 | Adhesive/Tie Layer: | EVA-2 | 5 | 5 |
| Layer 4 | Barrier (Core) Layer: | PVDC | 10 | 10 |
| Layer 5 | Adhesive/Tie Layer: | EVA-2 | 5 | 5 |
| Layer 6 | Second Interior/Bulk Layer: | 40.0% EVA-1, 60% LLDPE-1 | 30 | 30 |
| Layer 7 | Second Exterior Layer: | 40.0% EVA-1, 55% LLDPE-1, 5% AB | 10 | 10 |

### Observations and Results

The above samples were then sealed using radio frequency and seal peel strength was measured using per ASTM F88. The films were sealed using a Strayfield Ltd RF sealing machine IPW9/SH with a supply frequency of 50Hz, use frequency of 27.12MHz. Two square samples were cut from each test film and these are sealed together to make a square pouch by applying the RF power source for 1.2seconds, followed by cooling of 2.0seconds. Several pouches are produced this way and then tested per ASTM F88. The average results for the Control and Examples 1-5 are described in Table 1 below. The control, which include 95% EVA and no EAO component in the outer two layers of the film exhibited good peel strength after RF sealing. The Control also had a dielectric loss factor of 0.09, which is indicative of RF sealability. Generally, a loss factor of 0.05 is indicative of a film's ability to be sealed with RF energy. As shown in Table 1, Examples 1-5 all had good peel strength properties and good dielectric properties.

In particular, in Examples 1-5 the outer exterior layers and first and second interior layers (layers 2 and 6) comprised a combination of LLDPE and EVA. These films showed good RF sealability and all had a peel strength of greater than 500 g/inch. Example 3, which include 50% by weight EVA in each of the layers had a peel strength of about 1356.8 g/inch.

Examples 12 and 13, which included less than 50% EVA in the outer exterior layers were not RF sealable.

Examples 9-11 comprised a combination of ethylene butyl acrylate or ethylene methyl acrylate copolymer and linear low density also showed excellent peel strength. In fact, the peel strengths of these films exhibited poor openability in particular applications due to the strengths of the seals. From this, it can be seen that EMA and EBA copolymers can also be blended with ethylene/alpha-olefins, such as LLDPE, to provide RF sealable films.

**TABLE 1: RF Seal Strength Dielectric Properties of Examples 1-5**

| | Dielectric Constant K | Dissipation Factor, D or tan δ (E-02) | Loss Factor KxD | RF peel strength (g/in) |
|---|---|---|---|---|
| Control | 2.70 | 3.18 | 0.09 | 2158.5 |
| Example 1 | 2.45 | 3.26 | 0.08 | 2039.8 |
| Example 2 | 2.48 | 1.98 | 0.05 | 1869.1 |
| Example 3 | 2.20 | 1.70 | 0.04 | 1356.8 |
| Example 4 | 2.43 | 2.01 | 0.05 | 1926.6 |
| Example 5 | 2.45 | 2.17 | 0.05 | 1984.5 |

Measured in accordance with ASTM D 150.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A multilayer radio frequency sealable film comprising an inner barrier layer and at least one layer forming an exterior surface of the film, said exterior layer comprising a blend of an ethylene/alpha olefin copolymer and 20% to 80% by weight of an ethylene acrylate and/or ethylene vinyl acetate copolymer selected from the group consisting of ethylene methyl acrylate, ethylene vinyl acetate and ethylene butyl acrylate, and combinations thereof, wherein the film has a dielectric loss of at least 0.02 determined in accordance with ASTM D 150.

2. The film of claim 1, wherein the ethylene/alpha olefin copolymer is linear low density polyethylene.

3. The film of claim 1 or 2, wherein the ethylene acrylate and/or ethylene vinyl acetate copolymer is ethylene vinyl acetate (EVA), and wherein the EVA is present in the exterior layer in an amount that is at least 50 percent by weight.

4. The film of claim 1 comprising first and second exterior layers and at least one inner barrier layer disposed therebetween, each exterior layer comprising a blend of a linear low density polyethylene and 45% to 80% by weight of an ethylene vinyl acetate copolymer.

5. The film of claim 4, wherein the film has a thickness of less than 100 microns and preferably less than 50 microns.

6. The film of claim 4 or 5, wherein the amount of the ethylene vinyl acetate copolymer in each of the outer layers is at least 50 percent by weight, and wherein the content of vinyl acetate in the ethylene vinyl acetate copolymer is from 12 to 28 weight percent.

7. The film of any one of claims 4 to 6, wherein each of the outer layers has a thickness that is from 5 to 20 microns.

8. The film of claim 1 comprising:
first and second exterior layers each comprising a blend of an ethylene/alpha olefin copolymer and 20% to 80% by weight of an ethylene acrylate and/or ethylene vinyl acetate copolymer selected from the group consisting of ethylene methyl acrylate, ethylene vinyl acetate and ethylene butyl acrylate, and combinations thereof;
a barrier layer disposed between the first and second exterior layers;
first and second interior layers disposed on opposite sides of the barrier layer, each comprising a blend of an ethylene/alpha olefin copolymer and 20% to 80% by weight of an ethylene acrylate and/or ethylene vinyl acetate copolymer selected from the group consisting of ethylene methyl acrylate, ethylene vinyl acetate and ethylene butyl acrylate, and combinations thereof, wherein the first and second interior layers each comprise 25 to 40% of the film thickness, and wherein the weight percent of the ethylene acrylate and/or ethylene vinyl acetate copolymer in the first and second exterior layers is equal to or greater than that of the first and second interior layers.

9. The film of claim 8, wherein the first and second exterior layers comprise a blend of a linear low density polyethylene and at least 50% by weight of an ethylene vinyl acetate copolymer.

10. The film of claim 9, wherein the first and second exterior layers each comprise 50 to 70 weight percent ethylene vinyl acetate copolymer, and the first and second interior layers each comprise 50 to 60 weight percent ethylene vinyl acetate copolymer.

11. The film of any one of claims 8 to 10, wherein the ethylene/alpha olefin copolymer is linear low density polyethylene.

12. The film of any one of claims 8 to 11, wherein the composition of the first interior layer is the same as the composition of the second interior layer.

13. The film of any one of claims 8 to 12, further comprising a pair of adhesive layers that are each disposed between one the first and second interior layers and the core layer.

14. The film of any one of claims 8 to 13, wherein the ethylene acrylate and/or ethylene vinyl acetate copolymer in the first and second exterior layers comprises ethylene vinyl acetate, and wherein the ethylene acrylate and/or ethylene vinyl acetate copolymer in the first and second interior layers comprises ethylene methyl acrylate, ethylene butyl acrylate, or a combination thereof.

15. The film of any one of claims 4 to 14, wherein the barrier layer is selected from the group consisting of poly(ethylene/vinyl alcohol) (EVOH), poly(vinyl alcohol) (PVOH), polyacrylonitrile (PAN), polyesters, polyvinyl chloride and its copolymers, polyvinylidene chloride and its copolymers, and polyamides.

16. A pouch for the packaging and administration of medical solutions, the pouch being formed from the film of any one of claims 1 to 15.

17. A pouch for the collection of human drainage, the pouch being formed from the film of any one of claims 1 to 15.

## Patentansprüche

1. Mehrschichtige, radiofrequenz-versiegelbare Folie, die eine innere Barriereschicht und mindestens eine Schicht umfasst, die eine äußere Oberfläche der Folie bildet, wobei die äußere Schicht eine Mischung eines Ethylen/alpha-Olefin-Copolymers und 20 bis 80 Gew.-% eines Ethylen-Acrylat- und/oder Ethylen-Vinylacetat-Copolymers umfasst, das aus der Gruppe bestehend aus Ethylen-Methylacrylat, Ethylen-Vinylacetat und Ethylen-Butylacrylat und Kombinationen davon ausgewählt ist, wobei die Folie einen dielektrischen Verlustfaktor von mindestens 0,02, bestimmt gemäß ASTM D 150, aufweist.

2. Folie nach Anspruch 1, bei der das Ethylen/alpha-Olefin-Copolymer lineares Polyethylen niedriger Dichte ist.

3. Folie nach Anspruch 1 oder 2, bei der das Ethylen-Acrylat-und/oder Ethylen-Vinylacetat-Copolymer Ethylen-Vinylacetat (EVA) ist und bei der das EVA in der äußeren Schicht in einer Menge vorliegt, die mindestens 50 Gewichtsprozent beträgt.

4. Folie nach Anspruch 1, die erste und zweite äußere Schichten und mindestens eine dazwischen angeordnete innere Barriereschicht umfasst, wobei jede äußere Schicht eine Mischung eines linearen Polyethylens niedriger Dichte und 45 bis 80 Gew.-% eines Ethylen-Vinylacetat-Copolymers umfasst.

5. Folie nach Anspruch 4, bei der die Folie eine Dicke von weniger als 100 µm und vorzugsweise weniger als 50 µm aufweist.

6. Folie nach Anspruch 4 oder 5, bei der die Menge des Ethylen-Vinylacetat-Copolymers in jeder der äußeren Schichten mindestens 50 Gewichtsprozent beträgt und bei der der Gehalt an Vinylacetat in dem Ethylen-Vinylacetat-Copolymer 12 bis 28 Gewichtsprozent beträgt.

7. Folie nach einem der Ansprüche 4 bis 6, bei der jede der äußeren Schichten eine Dicke aufweist, die 5 bis 20 µm beträgt.

8. Folie nach Anspruch 1, die
erste und zweite äußere Schichten, die jeweils eine Mischung eines Ethylen/alpha-Olefin-Copolymers und 20 bis 80 Gew.-% eines Ethylen-Acrylat- und/oder Ethylen-Vinylacetat-Copolymers umfassen, das aus der Gruppe bestehend aus Ethylen-Methyl-acrylat, Ethylen-Vinylacetat und Ethylen-Butylacrylat und Kombinationen davon ausgewählt ist;
eine Barriereschicht, die zwischen der ersten und zweiten äußeren Schicht angeordnet ist;
erste und zweite innere Schichten umfasst, die auf entgegengesetzten Seiten der Barriereschicht angeordnet sind und jeweils eine Mischung eines Ethylen/alpha-Olefin-Copolymers und 20 bis 80 Gew.-% eines Ethylen-Acrylat- und/oder Ethylen-Vinylacetat-Copolymers aufweisen, das aus der Gruppe bestehend aus Ethylen-Methylacrylat, Ethylen-Vinylacetat und Ethylen-Butylacrylat und Kombinationen davon ausgewählt ist, wobei die erste und zweite innere Schicht jeweils 25 bis 40% der Foliendicke umfassen und wobei der Gewichtsanteil des Ethylen-Acrylat- und/oder Ethylen-Vinylacetat-Copolymers in der ersten und zweiten äußeren Schicht gleich dem oder größer als der der ersten und zweiten inneren Schicht ist.

9. Folie nach Anspruch 8, bei der die erste und zweite äußere Schicht eine Mischung eines linearen Polyethylens niedriger Dichte und mindestens 50 Gew.-% eines Ethylen-Vinylacetat-Copolymers umfassen.

10. Folie nach Anspruch 9, bei der die erste und zweite äußere Schicht jeweils 50 bis 70 Gewichtsprozent Ethylen-Vinylacetat-Copolymer und die erste und zweite innere Schicht jeweils 50 bis 60 Gewichtsprozent Ethylen-Vinylacetat-Copolymer umfassen.

11. Folie nach einem der Ansprüche 8 bis 10, bei der das Ethylen/alpha-Olefin-Copolymer lineares Polyethylen niedriger Dichte ist.

12. Folie nach einem der Ansprüche 8 bis 11, bei der die Zusammensetzung der ersten inneren Schicht dieselbe wie die Zusammensetzung der zweiten inneren Schicht ist.

13. Folie nach einem der Ansprüche 8 bis 12, die ferner ein Paar von adhäsiven Schichten umfasst, die jeweils zwischen einer der ersten und zweiten inneren Schichten und der Kernschicht angeordnet sind.

14. Folie nach einem der Ansprüche 8 bis 13, bei der das Ethylen-Acrylat und/oder Ethylen-Vinylacetat-Copolymer in der ersten und zweiten äußeren Schicht Ethylen-Vinylacetat umfasst und bei der das Ethylen-Acrylat- und/oder Ethylen-Vinylacetat-Copolymer in der ersten und zweiten inneren Schicht Ethylen-Methylacrylat, Ethylen-Butylacrylat oder eine Kombination davon umfasst.

15. Folie nach einem der Ansprüche 4 bis 14, bei der die Barriereschicht aus der Gruppe bestehend aus Poly(ethylen/vinylalkohol) (EVOH), Poly(vinylalkohol) (PVOH), Polyacrylnitril (PAN), Polyestern, Polyvinylchlorid und dessen Copolymeren, Polyvinylidenchlorid und dessen Copolymeren und Polyamiden ausgewählt ist.

16. Beutel zur Verpackung und Verabreichung von medizinischen Lösungen, wobei der Beutel aus der Folie nach einem der Ansprüche 1 bis 15 gebildet ist.

17. Beutel zum Sammeln von menschlichen Ausscheidungen, wobei der Beutel aus der Folie nach einem der Ansprüche 1 bis 15 gebildet ist.

## Revendications

1. Film scellable par radiofréquences multicouche comprenant une couche barrière interne et au moins une couche formant une surface extérieure du film, ladite couche extérieure comprenant un mélange d'un copolymère d'éthylène/alpha-oléfine et 20 % à 80 % en poids d'un copolymère d'éthylène-acrylate et/ou d'éthylène-acétate de vinyle choisi dans le groupe constitué d'éthylène-acrylate de méthyle, d'éthylène-acétate de vinyle et d'éthylène-acrylate de butyle, et de combinaisons de ceux-ci, dans lequel le film présente une perte diélectrique d'au moins 0,02 déterminée selon l'ASTM D 150.

2. Film selon la revendication 1, dans lequel le copolymère d'éthylène/alpha-oléfine est du polyéthylène linéaire de faible densité.

3. Film selon la revendication 1 ou 2, dans lequel le copolymère d'éthylène-acrylate et/ou d'éthylène-acétate de vinyle est de l'éthylène-acétate de vinyle (EVA), et dans lequel l'EVA est présent dans la couche extérieure dans une quantité qui est d'au moins 50 % en poids.

4. Film selon la revendication 1, comprenant des première et seconde couches extérieures et au moins une couche de barrière interne disposée entre elles, chaque couche extérieure comprenant un mélange d'un polyéthylène linéaire de faible densité et de 45 % à 80 % en poids d'un copolymère d'éthylène-acétate de vinyle.

5. Film selon la revendication 4, dans lequel le film a une épaisseur inférieure à 100 microns et de préférence, inférieure à 50 microns.

6. Film selon la revendication 4 ou 5, dans lequel la quantité du copolymère d'éthylène-acétate de vinyle dans chacune des couches externes est d'au moins 50 % en poids, et dans lequel la teneur en acétate de vinyle du copolymère d'éthylène-acétate de vinyle va de 12 à 28 % en poids.

7. Film selon l'une quelconque des revendications 4 à 6, dans lequel chacune des couches externes a une épaisseur qui va de 5 à 20 microns.

8. Film selon la revendication 1, comprenant :
des première et seconde couches extérieures, comprenant chacune un mélange d'un copolymère d'éthylène/alpha-oléfine et de 20 % à 80 % en poids d'un copolymère d'éthylène-acrylate et/ou d'éthylène-acétate de vinyle choisi dans le groupe constitué d'éthylène-acrylate de méthyle, d'éthylène-acétate de vinyle et d'éthylène-acrylate de butyle, et de combinaisons de ceux-ci ;
une couche de barrière disposée entre les première et seconde couches extérieures ;
des première et seconde couches intérieures disposées sur les faces opposées de la couche barrière, comprenant chacune un mélange d'un copolymère d'éthylène/alpha-oléfine et de 20 % à 80 % en poids d'un copolymère d'éthylène-acrylate et/ou d'éthylène-acétate de vinyle choisi dans le groupe constitué d'éthylène-acrylate de méthyle, d'éthylène-acétate de vinyle et d'éthylène-acrylate de butyle, et de combinaisons de ceux-ci, dans lequel les première et seconde couches intérieures comprennent chacune 25 à 40 % de l'épaisseur du film, et dans lequel le pourcentage en poids du copolymère d'éthylène-acrylate et/ou d'éthylène-acétate de vinyle dans les première et seconde couches extérieures est supérieur ou égal à celui des première et seconde couches intérieures.

9. Film selon la revendication 8, dans lequel les première et seconde couches extérieures comprennent un mélange d'un polyéthylène linéaire de faible densité et d'au moins 50 % en poids d'un copolymère d'éthylène-acétate de vinyle.

10. Film selon la revendication 9, dans lequel les première et seconde couches extérieures comprennent chacune 50 à 70 % en poids de copolymère d'éthylène-acétate de vinyle, et les première et seconde couches intérieures comprennent chacune 50 à 60 % en poids de copolymère d'éthylène-acétate de vinyle.

11. Film selon l'une quelconque des revendications 8 à 10, dans lequel le copolymère d'éthylène/alpha-oléfine est du polyéthylène linéaire de faible densité.

12. Film selon l'une quelconque des revendications 8 à 11, dans lequel la composition de la première couche intérieure est la même que la composition de la seconde couche intérieure.

13. Film selon l'une quelconque des revendications 8 à 12, comprenant en outre une paire de couches adhésives qui sont chacune disposées entre l'une des première et seconde couches intérieures et la couche centrale.

14. Film selon l'une quelconque des revendications 8 à 13, dans lequel le copolymère d'éthylène-acrylate et/ou d'éthylène-acétate de vinyle dans les première et seconde couches extérieures comprend de l'éthylène-acétate de vinyle, et dans lequel le copolymère d'éthylène-acrylate et/ou d'éthylène-acétate de vinyle dans les première et seconde couches intérieures comprend de l'éthylène-acrylate de méthyle, de l'éthylène-acrylate de butyle, ou une combinaison de ceux-ci.

15. Film selon l'une quelconque des revendications 4 à 14, dans lequel la couche de barrière est choisie dans le groupe constitué de poly(éthylène/alcool vinylique) (EVOH), de poly(alcool vinylique) (PVOH), de polyacrylonitrile (PAN), de polyesters, de chlorure de polyvinyle et ses copolymères, de chlorure de polyvinylidène et ses copolymères et de polyamides.

16. Sachet pour le conditionnement et l'administration de solutions médicales, le sachet étant formé à partir du film selon l'une quelconque des revendications 1 à 15.

17. Sachet pour la collecte de drainage humain, le sachet étant formé à partir du film selon l'une quelconque des revendications 1 à 15.
